# EUROPEAN PATENT APPLICATION

(11) **EP 2 763 484 A1**
(43) Date of publication of application: **06.08.2014**
(21) Application number: 11873361.7
(22) Date of filing: 28.09.2011
(51) Int. Cl.: H04W 72/10

(54) **SCHEDULING AND ALLOCATION METHOD AND DEVICE IN COORDINATED MULTIPLE POINT SYSTEM**

(71) Applicant: Fujitsu Limited, Kawasaki-shi, Kanagawa 211-8588 (JP)
(72) Inventor: LI, Hongchao, Beijing 100025 (CN); ZHOU, Hua, Beijing 100025 (CN); WU, Jianming, Beijing 100025 (CN)
(74) Representative: Ward, James Norman
(86) International application number: PCT/CN2011/080299
(87) International publication number: WO 2013/044468

(57) **Abstract**

Embodiments of the present invention provide a scheduling allocation method and apparatus in a coordinated multiple points system. The scheduling allocation method includes: receiving demanded resource parameters and available resource parameters transmitted by a plurality of cell base stations or transmission points, each of the demanded resource parameters reflecting a service load of each cell base station or transmission point, and each of the available resource parameters reflecting status of available resources of each cell base station or transmission point; sorting priorities of the plurality of cell base stations or transmission points according to the received demanded resource parameters and available resource parameters; and determining scheduling modes of the plurality of cell base stations or transmission points according to the sorted priorities. With the embodiments of the present invention, user resources of some cells being limited due to an order of scheduling may be avoided, while taking into consideration that the coordinated multiple points will bring performance gains to a single user, thereby preventing the system performance from being damaged.

## Description

### Technical Field

The present invention relates to the field of communications, and in particular to a scheduling allocation method and apparatus in a coordinated multiple points system.

### Background

In a long-term evolution-advance (LTE-A) system, transmission nodes of low power are introduced on a basis of a conventional homogeneous network, so as to constitute a heterogeneous network, which includes a macro cell, a femto cell, a pico cell, a remote radio head (RRH), and a relay.

In order to improve cell coverage and user's experience and increase throughput of an LTE-A system and a data transmission rate of a user, a coordinated multiple points (CoMP) technology has been introduced. Such a technology is to coordinate with a user in data transmission by using multiple geographically distributed transmission points, thereby improving performance of a cell-edge user and coverage of the cell, increasing throughput of the cell edge and the throughput of the system, and improving user's experience.

The CoMP transmission scheme includes joint processing (JP) and coordination scheduling/beamforming (CS/CB). The former denotes that there exist simultaneously multiple transmission points having data to be transmitted to user equipment at the same time, and one or more transmission points are dynamically selected from the multiple points to transmit data to the user equipment; and the latter denotes that there exists only one transmission point to transmit data to user equipment at the same time; wherein, the type of a transmission point may be a conventional macro cellular base station, or an RRH, and may also be a heterogeneous node, such as a pico base station; it may a node of high power, and may also be a node of low power.

However, in the implementation of the embodiments of the present invention, the inventors found that when a base station schedules a user in a manner of joint transmission (JT) or dynamic point selection (DPS), including dynamic point blanking (DPB), both belonging to the scope of JP, it is possible that multiple physical resources of multiple cells are allocated to a certain user of a certain cell.

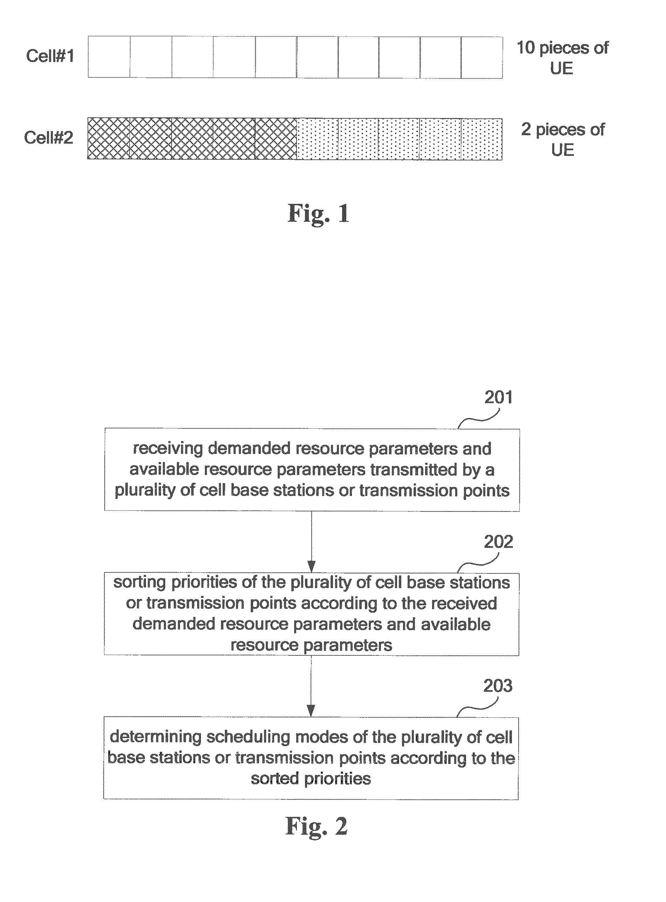

Figure 1 is a schematic diagram of an example of resource allocation in the relevant art, in which cell#1 and cell#2 perform joint processing, cell#1 serving for 10 pieces of user equipment, and cell#2 serving for 2 pieces of user equipment. As shown in Fig. 1, if half of the resources in cell#1 and cell#2 (for example, as shown in 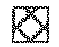 in Fig.1) are used at the same time for a certain user in cell#2 for transmission, it will be resulted in that the 10 pieces of user equipment in cell#1 share the rest half of the total resources, thereby resulting in that the resources are limited in case of multiple users in a cell, and the performance of the system is degraded.

It should be noted that the above description of the background art is merely provided for clear and complete explanation of the present invention and for easy understanding by those skilled in the art. And it should not be understood that the above technical solution is known to those skilled in the art as it is described in the background art of the present invention.

### Summary

Embodiments of the present invention provide a scheduling allocation method and apparatus in a coordinated multiple points system, with an object being to estimate an priority of scheduling between different transmission points or cells in a multiple points system, so as to avoid user resources of some cells being limited due to an order of scheduling, while taking into consideration that the coordinated multiple points will bring performance gains to a single user.

According to one aspect of the embodiments of the present invention, there is provided a scheduling allocation method in a coordinated multiple points system, including:
a receiving information process for receiving demanded resource parameters and available resource parameters transmitted by a plurality of cell base stations or transmission points, each of the demanded resource parameters reflecting a service load of each cell base station or transmission point, and each of the available resource parameters reflecting status of available resources of each cell base station or transmission point;
a sorting priority process for sorting priorities of the plurality of cell base stations or transmission points according to the received demanded resource parameters and available resource parameters; and
a determining scheduling process for determining scheduling modes of the plurality of cell base stations or transmission points according to the sorted priorities.

According to another aspect of the embodiments of the present invention, there is provided a scheduling allocation method in a coordinated multiple points system, applicable to a cell base station or transmission point in the coordinated multiple points system, the scheduling allocation method including:
a receiving information process for receiving a demanded resource parameter and an available resource parameter transmitted by other cell base station or transmission point, the demanded resource parameter reflecting a service load of the other cell base station or transmission point, and the available resource parameter reflecting status of available resources of the other base station or transmission point; and
a determining scheduling process for determining a scheduling mode of the cell base station or transmission point according to the received demanded resource parameter and available resource parameter and a predefined threshold value.

According to still another aspect of the embodiments of the present invention, there is provided a scheduling allocation apparatus, applicable to a coordinated multiple points system, the scheduling allocation apparatus including:
an information receiving unit, configured to receive demanded resource parameters and available resource parameters transmitted by a plurality of cell base stations or transmission points, each of the demanded resource parameters reflecting a service load of each cell base station or transmission point, and each of the available resource parameters reflecting status of available resources of each cell base station or transmission point;
a priority sorting unit, configured to sort priorities of the plurality of cell base stations or transmission points according to the received demanded resource parameters and available resource parameters; and
a scheduling determining unit, configured to determine scheduling modes of the plurality of cell base stations or transmission points according to the sorted priorities.

According to a further aspect of the embodiments of the present invention, there is provided a scheduling allocation apparatus, configured in a cell base station or transmission point in a coordinated multiple points system, the scheduling allocation apparatus including:
an information receiving unit, configured to receive a demanded resource parameter and an available resource parameter transmitted by other cell base station or transmission point, the demanded resource parameter reflecting a service load of the other cell base station or transmission point, and the available resource parameter reflecting status of available resources of the other base station or transmission point; and
a scheduling determining unit, configured to determine a scheduling mode of the cell base station or transmission point according to the received demanded resource parameter and available resource parameter and a predefined threshold value.

According to still another aspect of the embodiments of the present invention, there is provided a computer-readable program, wherein when the program is executed in a base station, the program enables a computer to carry out the scheduling allocation method as described above in the base station.

According to still another aspect of the embodiments of the present invention, there is provided a storage medium in which a computer-readable program is stored, wherein the computer-readable program enables a computer to carry out the scheduling allocation method as described above in a base station.

The advantages of the embodiments of the present invention reside in that an priority of scheduling between different transmission points or cells in a multiple points system is estimated by using a demanded resource parameter and an available resource parameter, so as to avoid user resources of some cells being limited due to an order of scheduling, while taking into consideration that the coordinated multiple points will bring performance gains to a single user, thereby preventing the system performance from being damaged.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be enlarged or reduced.

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.
Figure 1 is a schematic diagram of an example of resource allocation in the relevant art;
Figure 2 is a flowchart of the scheduling allocation method of an embodiment of the present invention;
Figure 3 is a schematic diagram of an example of using centralized scheduling of an embodiment of the present invention;
Figure 4 is a schematic diagram of an example of using distributed scheduling of an embodiment of the present invention;
Figure 5 is a schematic diagram of the structure of the scheduling allocation apparatus of an embodiment of the present invention;
Figure 6 is a flowchart of the scheduling allocation method of an embodiment of the present invention; and
Figure 7 is a schematic diagram of the structure of the scheduling allocation apparatus of an embodiment of the present invention.

### Detailed Description

These and further aspects and features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

### Embodiment 1

An embodiment of the present invention provides a scheduling allocation method in a coordinated multiple points system. Fig. 2 is a flowchart of the scheduling allocation method of the embodiment of the present invention. As shown in Fig. 2, the scheduling allocation method includes:
step 201: receiving demanded resource parameters and available resource parameters transmitted by a plurality of cell base stations or transmission points, each of the demanded resource parameters reflecting a service load of each cell base station or transmission point, and each of the available resource parameters reflecting status of available resources of each cell base station or transmission point;
step 202: sorting priorities of the plurality of cell base stations or transmission points according to the received demanded resource parameters and available resource parameters; and
step 203: determining scheduling modes of the plurality of cell base stations or transmission points according to the sorted priorities.

In this embodiment, each of the demanded resource parameters reflecting a service load of each cell base station or transmission point and each of the available resource parameters reflecting status of available resources of each cell base station or transmission point may be obtained by respective cell base station or transmission point by using an existing method.

In the particular implementation, the demanded resource parameter may be an average number of physical resource blocks (PRBs) demanded by each piece of activated user equipment served by the respective cell base station or transmission point, and the available resource parameter is an average number of available PRBs of each piece of activated user equipment served by the respective cell base station or transmission point. However, it should be noted that the present invention is not limited thereto, and particular parameters may be determined as actually required.

In this embodiment, a scheduling mode of the cell base station or transmission point may be a scheduling mode of coordinated multiple points or coordinated multiple cells, or a scheduling mode of single cell transmission, or a scheduling mode of single point transmission, etc.

In this embodiment, step 203 may further be used to determine resource allocation of the plurality of cell base stations or transmission points according to the priorities. The scheduling allocation method shall be described below in detail taking a centralized manner and a distributed manner as examples, respectively.

In a mode of implementation, the scheduling allocation method may be carried out in a centralized manner, and is applicable to a centralized scheduler in the coordinated multiple points system. Following description is given taking three cells as an example. However, the present invention is not limited thereto.

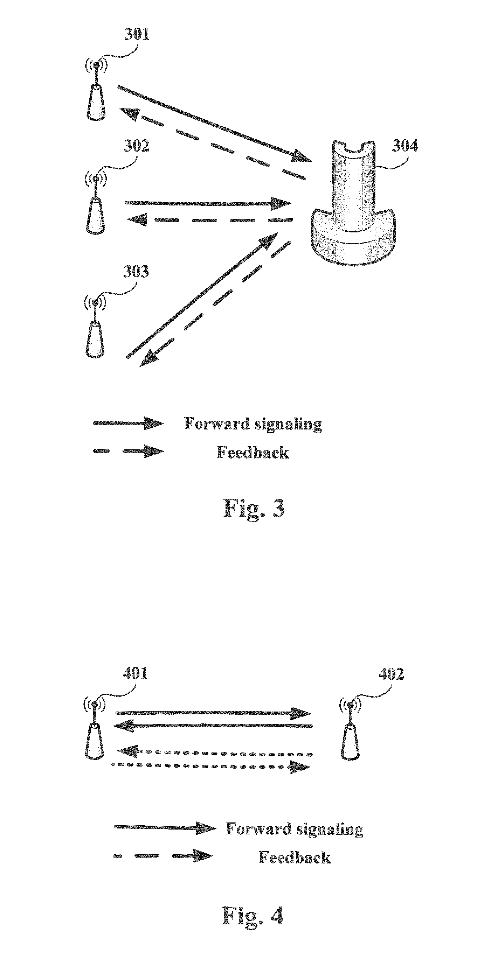

Fig. 3 is a schematic diagram of an example of using centralized scheduling of an embodiment of the present invention. As shown in Fig. 3, it includes three cells (Cell#1 301, Cell#2 302 and Cell#3 303) and a centralized scheduler 304; wherein, the centralized scheduler 304 may be another network device, and may also be another cell base station or transmission point in the coordinated multiple points system, which may be set as actually required.

In the particular implementation, the Cell#1, Cell#2 and Cell#3 may transmit channel state information (CSI), including RI, PMI, and CQI, etc., of each piece of activated user equipment for which they serve respectively, to the centralized scheduler 304; and the Cell#1, Cell#2 and Cell#3 transmit respective demanded resource parameter and available resource parameter to the centralized scheduler 304;
wherein, the demanded resource parameter is used to reflect a service load of each cell base station or transmission point, which may be denoted by N_req_k (k=1......K) ; and the available resource parameter is used to reflect the status of available resources of each cell base station or transmission point, which may be denoted by N_avai_k (k=1......K), K denoting the number of cell base station(s) or transmission point(s).

For example, N_req_1, N_req_2, ..., N_req_k denotes an average number of the PRBs demanded by each piece of activated user equipment obtained according to an estimated channel condition of each cell, and N_avai_1, N_avai_2,..., N_avai_k denotes an average number of the available PRBs of each piece of activated user equipment.

Therefore, two pieces of cell-specific or transmission point-specific X2 port signaling may be newly defined, one piece indicates an average number of the PRBs demanded by each user, and the other piece indicates an average number of the available PRBs of each user. And the two pieces of new interactive signaling may be used to determine the scheduling priorities of a plurality of cell base stations or transmission points.

In the particular implementation, step 202 may include: a calculating priority process, for each cell base station or transmission point, for calculating a ratio of the demanded resource parameter to the available resource parameter, and taking the ratio as a reference value of the priority of the cell base station or the transmission point; and a determining priority process for determining the priorities of the plurality of cell base stations or transmission points according to the reference value of the priority.

For example, if N_req_1=3, N_req_2=2, N_req_3=5, N_req_4=10, N_avai_1=7, N_avai_2=2, N_avai_3=6, N_avai_4=3, it can be calculated that the reference value of priority to which Cell#1 corresponds is 3/7, the reference value of priority to which Cell#2 corresponds is 2/2, the reference value of priority to which Cell#3 corresponds is 5/6, the reference value of priority to which Cell#4 corresponds is 10/3, from which it can be determined that the order of priorities is Cell#4, Cell#2, Cell#3, Cell#1.

In this mode of implementation, a reference value for sorting is (N_req_k/ N_avai_k). In another case where the loads of the cells are very high and are basically consistent, the reference value may be changed into (1/ N_avai_k).

In another mode of implementation, the scheduling allocation method may be carried out in a distributed manner, and is applicable to a cell base station or a transmission point in a plurality of cell base stations or transmission points. Following description is given taking two cells as an example; however, the present invention is not limited thereto.

Fig. 4 is a schematic diagram of an example of using distributed scheduling of an embodiment of the present invention. As shown in Fig. 4, two cells (cell#1 401 and cell#2 402) are included; wherein, description is given taking cell#1 401 as an example, and cases for cell#2 402 are similar to this, and shall not be described herein any further.

In particular implementation, cell#1 401 is ready for scheduling user equipment UE#1 in a CoMP mode, and needs to occupy a time-frequency resource to which cell#2 402 corresponds; at the same time, cell#2 402 is ready for scheduling user equipment UE#2 in a CoMP mode, and needs to occupy a time-frequency resource to which cell#1 401 corresponds; therefore, cell#1 401 forwards N_avai_1 and N_req_1 to cell#2 402, and cell#2 402 forwards N_avai_2 and N_req_2 to cell#1 401;
after receiving N_avai_2 and N_req_2, cell#1 401 may also obtain N_avai_1 and N_req_1 of itself. A ratio (N_req_k_2/N_avai_k_2) and a ratio (N_req_k_1/ N_avai_k_1) may be calculated. And a scheduler of cell#1 401 may compare (N_req_k_2/N_avai_k_2) with (N_req_k_1/N_avai_k_1), and decide the priority of CoMP scheduling and resource occupying performed by the two cells.

An embodiment of the present invention further provides a scheduling allocation apparatus, applicable in a coordinated multiple points system; wherein, the contents identical to those in the above scheduling allocation method shall not be described herein any further.

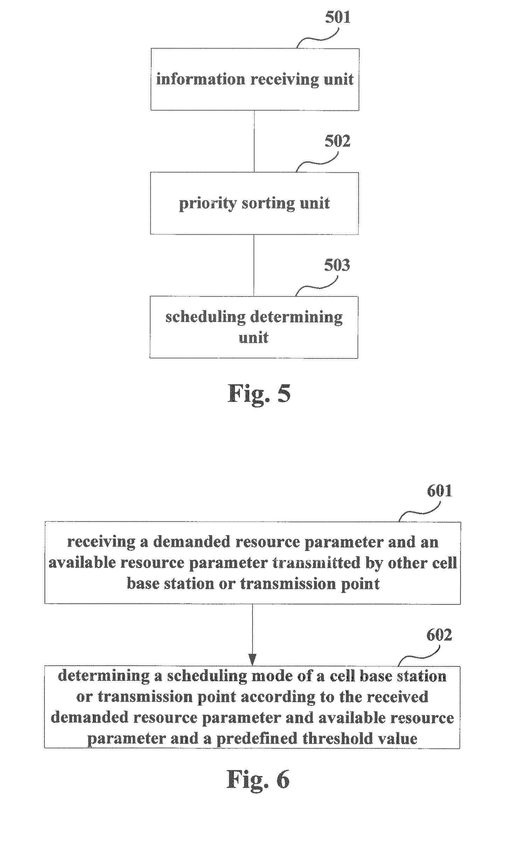

Fig. 5 is a schematic diagram of the structure of the scheduling allocation apparatus of an embodiment of the present invention. As shown in Fig. 5, the scheduling allocation apparatus includes: an information receiving unit 501, a priority sorting unit 502 and a scheduling determining unit 503;
wherein, the information receiving unit 501 is configured to receive demanded resource parameters and available resource parameters transmitted by a plurality of cell base stations or transmission points, each of the demanded resource parameters reflecting a service load of each cell base station or transmission point, and each of the available resource parameters reflecting status of available resources of each cell base station or transmission point; the priority sorting unit 502 is configured to sort priorities of the plurality of cell base stations or transmission points according to the received demanded resource parameters and available resource parameters; and the scheduling determining unit 503 is configured to determine scheduling modes of the plurality of cell base stations or transmission points according to the sorted priorities.

Furthermore, the scheduling determining unit 503 is further configured to determine resource allocation of a plurality of cell base stations or transmission points.

In a mode of implementation, the scheduling allocation apparatus is configured in a centralized scheduler of the coordinated multiple points system.

In another mode of implementation, the scheduling allocation apparatus is configured in one of the plurality of cell base stations or transmission points.

For example, the demanded resource parameter may particular be an average number of the PRBs demanded by each piece of activated user equipment served by the cell base station or transmission point; and the available resource parameter may particular be an average number of available PRBs of each piece of activated user equipment served by the cell base station or transmission point.

Furthermore, the priority sorting unit 502 may include: a priority calculating unit configured to, for each cell base station or transmission point, calculate the ratio of the demanded resource parameter to the available resource parameter as a reference value of the priority of the cell base station or the transmission point; and a priority determining unit configured to determine the priorities of the plurality of cell base stations or transmission points according to the reference value of the priority.

It can be seen from the above embodiment that a priority for scheduling between different transmission points or cells in a coordinated multiple points system is estimated by using the demanded resource parameter and the available resource parameter, so as to avoid user resources of some cells being limited due to an order of scheduling, while taking into consideration that the coordinated multiple points will bring performance gains to a single user, thereby preventing the system performance from being damaged.

### Embodiment 2

An embodiment of the present invention further provides a scheduling allocation method in a coordinated multiple points system, applicable to a cell base station or transmission point in the coordinated multiple points system; wherein, the contents identical to those in Embodiment 1 shall not be described herein any further.

Fig. 6 is a flowchart of the scheduling allocation method of the embodiment of the present invention. As shown in Fig. 6, the scheduling allocation method includes:
step 601: receiving a demanded resource parameter and an available resource parameter transmitted by other cell base station or transmission point, the demanded resource parameter reflecting a service load of the other cell base station or transmission point, and the available resource parameter reflecting status of available resources of the other base station or transmission point; and
step 602: determining a scheduling mode of the cell base station or transmission point according to the received demanded resource parameter and available resource parameter and a predefined threshold value.

In the particular implementation, the cell base station or transmission point, together with the other cell base station or transmission point, may be configured in a distributed manner; wherein, the number of the other cell base station or transmission point may be one or more, and may be determined as actually required.

In this embodiment, the scheduling mode of the cell base station or transmission point may be a scheduling mode of coordinated multiple cells or multiple points, or a scheduling mode of single cell transmission, etc. In step 602, resource allocation of the cell base station or transmission point may be determined according to the comparison result.

In the particular implementation, the demanded resource parameter may particular be an average number of the PRBs demanded by each piece of activated user equipment served by the other cell base station or transmission point; and the available resource parameter may particular be an average number of available PRBs of each piece of activated user equipment served by the other cell base station or transmission point.

In particular implementation, step 602 may include: a calculating reference value process for calculating a ratio of the demanded resource parameter to the available resource parameter as a reference value of the other cell base station or the transmission point; and a determining mode process for comparing the reference value with the threshold value, and determining a scheduling mode of the cell base station or the transmission point according to the comparison result.

Furthermore, the calculating reference value process may further include: calculating a posterior value of the ratio of the demanded resource parameter to the available resource parameter as a reference value of the other cell base station or the transmission point, thereby performing estimation more accurately.

The scheduling allocation method shall be described in detail taking the distributed structure shown in Fig. 4 as an example; wherein, cell#1 corresponds to the above cell base station or transmission point, and cell#2 corresponds to the above other cell base station or transmission point.

In particular implementation, cell#1 is ready for scheduling user equipment UE#1 of the local cell in a CoMP mode, and needs to occupy a time-frequency resource of cell#2; cell#2 transmits N_avai_2 and N_req_2 to cell#1; and cell#1 may estimate a posterior value of (N_req_k_2/N_avai_k_2) if UE#1 is scheduled in a CoMP mode and this section of time-frequency resource is occupied by itself, thereby obtaining the posterior value of the ratio.

Then, cell#1 may compare the estimated posterior value of (N_req_k_2/ N_avai_k_2) with a predefined threshold value, so as to determine whether cell#1 schedules UE#1 in a CoMP mode or a mode of single cell transmission.

An embodiment of the present invention further provides a scheduling allocation apparatus, applicable to a cell base station or transmission point in the coordinated multiple points system; wherein, the contents identical to those in the above scheduling allocation method shall not be described herein any further.

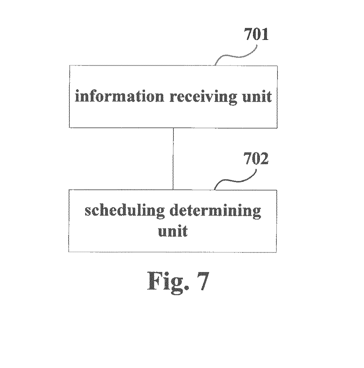

Fig. 7 is a schematic diagram of the structure of the scheduling allocation apparatus of an embodiment of the present invention. As shown in Fig. 7, the scheduling allocation apparatus includes: an information receiving unit 701 and a scheduling determining unit 702;
wherein, the information receiving unit 701 is configured to receive a demanded resource parameter and an available resource parameter transmitted by other cell base station or transmission point, the demanded resource parameter reflecting a service load of the other cell base station or transmission point, and the available resource parameter reflecting status of available resources of the other base station or transmission point; and the scheduling determining unit 702 is configured to determine a scheduling mode of the cell base station or transmission point according to the received demanded resource parameter and available resource parameter and a predefined threshold value.

For example, the demanded resource parameter may particularly be an average number of the PRBs demanded by each piece of activated user equipment served by the other cell base station or transmission point; and the available resource parameter may particularly be an average number of available PRBs of each piece of activated user equipment served by the other cell base station or transmission point.

Furthermore, the scheduling determining unit 702 may include: a reference value calculating unit configured to calculate a ratio of the demanded resource parameter to the available resource parameter as a reference value of the other cell base station or the transmission point; and a mode determining unit configured to compare the reference value with the threshold value, and determine the scheduling mode of the cell base station or the transmission point according to the comparison result.

Furthermore, the reference value calculating unit may further be configured to calculate a posterior value of the ratio of the demanded resource parameter to the available resource parameter as a reference value of the other cell base station or the transmission point.

Furthermore, the scheduling determining unit 702 is further configured to determine resource allocation of the cell base station or transmission point according to the comparison result.

It can be seen from the above embodiment that a priority for scheduling between different transmission points or cells in a coordinated multiple points system is estimated by using the demanded resource parameter and the available resource parameter, so as to avoid user resources of some cells being limited due to an order of scheduling, while taking into consideration that the coordinated multiple points will bring performance gains to a single user, thereby preventing the system performance from being damaged.

An embodiment of the present invention further provides a computer-readable program, wherein when the program is executed in a base station, the program enables a computer to carry out the scheduling allocation method as described above in the base station.

An embodiment of the present invention further provides a storage medium in which a computer-readable program is stored, wherein the computer-readable program enables a computer to carry out the scheduling allocation method as described above in a base station.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. A scheduling allocation method in a coordinated multiple points system, comprising:
a receiving information process for receiving demanded resource parameters and available resource parameters transmitted by a plurality of cell base stations or transmission points, each of the demanded resource parameters reflecting a service load of each cell base station or transmission point, and each of the available resource parameters reflecting status of available resources of each cell base station or transmission point;
a sorting priority process for sorting priorities of the plurality of cell base stations or transmission points according to the received demanded resource parameters and available resource parameters; and
a determining scheduling process for determining scheduling modes of the plurality of cell base stations or transmission points according to the sorted priorities.

2. The scheduling allocation method according to claim 1, wherein the scheduling allocation method is applicable to a centralized scheduler in the coordinated multiple points system; or
the scheduling allocation method is applicable to one of the plurality of cell base stations or transmission points.

3. The scheduling allocation method according to claim 1, wherein the demanded resource parameter is an average number of physical resource blocks demanded by each piece of activated user equipment served by the cell base station or transmission point; and
the available resource parameter is an average number of available physical resource blocks of each piece of activated user equipment served by the cell base station or transmission point.

4. The scheduling allocation method according to claim 1, wherein the sorting priority process comprises:
a calculating priority process, for each cell base station or transmission point, for calculating a ratio of the demanded resource parameter to the available resource parameter as a reference value of the priority of the cell base station or the transmission point; and
a determining priority process for determining the priorities of the plurality of cell base stations or transmission points according to the reference value of the priority.

5. The scheduling allocation method according to claim 1, wherein the determining scheduling process further comprises:
determining resource allocation of the plurality of cell base stations or transmission points according to the priorities.

6. A scheduling allocation method in a coordinated multiple points system, applicable to a cell base station or transmission point in the coordinated multiple points system, the scheduling allocation method comprising:
a receiving information process for receiving a demanded resource parameter and an available resource parameter transmitted by other cell base station or transmission point, the demanded resource parameter reflecting a service load of the other cell base station or transmission point, and the available resource parameter reflecting status of available resources of the other base station or transmission point; and
a determining scheduling process for determining a scheduling mode of the cell base station or transmission point according to the received demanded resource parameter and available resource parameter and a predefined threshold value.

7. The scheduling allocation method according to claim 6, wherein the demanded resource parameter is an average number of physical resource blocks demanded by each piece of activated user equipment served by the other cell base station or transmission point; and
the available resource parameter is an average number of available physical resource blocks of each piece of activated user equipment served by the other cell base station or transmission point.

8. The scheduling allocation method according to claim 6, wherein the determining scheduling process specifically comprises:
a calculating reference value process for calculating a ratio of the demanded resource parameter to the available resource parameter as a reference value of the other cell base station or the transmission point; and
a determining mode process for comparing the reference value with the threshold value, and determining the scheduling mode of the cell base station or the transmission point according to the comparison result.

9. The scheduling allocation method according to claim 8, wherein the determining scheduling process further comprises:
calculating a posterior value of the ratio of the demanded resource parameter to the available resource parameter as a reference value of the other cell base station or the transmission point.

10. The scheduling allocation method according to claim 8, wherein the determining scheduling process further comprises:
determining resource allocation of the cell base station or transmission point according to the comparison result.

11. A scheduling allocation apparatus, applicable in a coordinated multiple points system, the scheduling allocation apparatus comprising:
an information receiving unit, configured to receive demanded resource parameters and available resource parameters transmitted by a plurality of cell base stations or transmission points, each of the demanded resource parameters reflecting a service load of each cell base station or transmission point, and each of the available resource parameters reflecting status of available resources of each cell base station or transmission point;
a priority sorting unit, configured to sort priorities of the plurality of cell base stations or transmission points according to the received demanded resource parameters and available resource parameters; and
a scheduling determining unit, configured to determine scheduling modes of the plurality of cell base stations or transmission points according to the sorted priorities.

12. The scheduling allocation apparatus according to claim 11, wherein the scheduling allocation apparatus is configured in a centralized scheduler of the coordinated multiple points system; or
the scheduling allocation apparatus is configured in one of the plurality of cell base stations or transmission points.

13. The scheduling allocation apparatus according to claim 11, wherein the demanded resource parameter is an average number of physical resource blocks demanded by each piece of activated user equipment served by the cell base station or transmission point; and
the available resource parameter is an average number of available physical resource blocks of each piece of activated user equipment served by the cell base station or transmission point.

14. The scheduling allocation apparatus according to claim 11, wherein the priority sorting unit comprises:
a priority calculating unit configured to, for each cell base station or transmission point, calculate a ratio of the demanded resource parameter to the available resource parameter as a reference value of the priority of the cell base station or the transmission point; and
a priority determining unit, configured to determine the priorities of the plurality of cell base stations or transmission points according to the reference value of the priority.

15. The scheduling allocation apparatus according to claim 11, wherein the scheduling determining unit is further configured to determine resource allocation of the plurality of cell base stations or transmission points according to the priorities.

16. A scheduling allocation apparatus, configured in a cell base station or transmission point in a coordinated multiple points system, the scheduling allocation apparatus comprising:
an information receiving unit, configured to receive a demanded resource parameter and an available resource parameter transmitted by other cell base station or transmission point, the demanded resource parameter reflecting a service load of the other cell base station or transmission point, and the available resource parameter reflecting status of available resources of the other base station or transmission point; and
a scheduling determining unit, configured to determine a scheduling mode of the cell base station or transmission point according to the received demanded resource parameter and available resource parameter and a predefined threshold value.

17. The scheduling allocation apparatus according to claim 16, wherein the demanded resource parameter is an average number of physical resource blocks demanded by each piece of activated user equipment served by the other cell base station or transmission point; and
the available resource parameter is an average number of available physical resource blocks of each piece of activated user equipment served by the other cell base station or transmission point.

18. The scheduling allocation apparatus according to claim 16, wherein the scheduling determining unit comprises:
a reference value calculating unit, configured to calculate a ratio of the demanded resource parameter to the available resource parameter as a reference value of the other cell base station or the transmission point; and
a mode determining unit, configured to compare the reference value with the threshold value, and determine the scheduling mode of the cell base station or the transmission point according to the comparison result.

19. The scheduling allocation apparatus according to claim 18, wherein the scheduling determining unit is further configured to calculate a posterior value of the ratio of the demanded resource parameter to the available resource parameter as a reference value of the other cell base station or the transmission point.

20. The scheduling allocation apparatus according to claim 18, wherein the scheduling determining unit is further configured to determine resource allocation of the cell base station or transmission point according to the comparison result.

21. A computer-readable program, wherein when the program is executed in a base station, the program enables a computer to carry out the scheduling allocation method as claimed in any one of claims 1-10 in the base station.

22. A storage medium in which a computer-readable program is stored, wherein the computer-readable program enables a computer to carry out the scheduling allocation method as claimed in any one of claims 1-10 in a base station.
